(19) Europäisches Patentamt

European Patent Office

Office européen des brevets

(11) **EP 1 318 453 A1**

(12) **EUROPEAN PATENT APPLICATION**

(43) Date of publication:
**11.06.2003 Bulletin 2003/24**

(51) Int Cl.7: **G06F 9/46**

(21) Application number: **01410158.8**

(22) Date of filing: **07.12.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (72) Inventor: **The designation of the inventor has not yet been filed** |
| (71) Applicant: **Hewlett-Packard Company**<br>**Palo Alto, CA 94304 (US)** | (74) Representative: **Lloyd, Richard Graham (GB)**<br>**Hewlett-Packard France**<br>**Intellectual Property Section**<br>**Legal Department**<br>**Etablissement de Grenoble**<br>**38053 Grenoble Cedex 09 (FR)** |

(54) **Scheduling system, method and apparatus for a cluster**

(57)    The invention provides for a method of optimizing a task-scheduling system where the method comprises decomposing one or more parallel programs into its component tasks and dynamically redistributing the parallel programs tasks into any available idle nodes in such a way that the execution time of the parallel program is decreased. The parallel programs, or jobs, may be represented as unitary two-dimensional blocks equating to the amount of time that the job will take to execute for a specified number of processors, or nodes, wherein the jobs are queued in, or dropped into, in an array whose width corresponds to the total number of available nodes in any single time interval. In one embodiment, the first phase of the technique may implement an algorithm to position each job in the array. The invention also provides extensions to take into account real-world behavior such as finite inter-processor communication time and context switching between jobs. Applications include finite element analysis, computationally intensive numerical calculations, modeling and statistical analysis of experimental data.

Phase 1

Gantt's diagram      Data structure $H$

(a)                              (b)

Phase 2

Gantt's diagram      Data structure $H$

(c)                              (d)

Fig 3

## Description

### Technical Field

The present invention relates to task scheduling in multicomputer systems having a plurality of nodes. That is, a network of processors having independent processors and memories capable of executing different instruction streams simultaneously. More particularly, although not exclusively, the present invention relates to inter and intra-job scheduling of parallel programs on a heterogeneous cluster of computational resources. The improved scheduling protocol may particularly, but without limitation, be applicable to the control and execution of application programs executing in a cluster of heterogeneous computers.

### Background Art

Improvements in microprocessors, memory, buses, high-speed networks and software have made it possible to assemble groups of relatively inexpensive commodity-off-the-shelf (COTS) components having processing power rivaling that of supercomputers. This has had the effect of pushing development in parallel computing away from specialized platforms such as the Cray/SGI to cheaper, general-purpose systems or clusters consisting of loosely coupled components built from single or multi-processor workstations or PCs. Such an approach can provide a substantial advantage, as it is now possible to build relatively inexpensive platforms that are suitable for a large class of applications and workloads.

A cluster typically comprises a loosely coupled network of computers having independent processors and memory capable of executing different instructions streams simultaneously. A network provides inter-processor communication in the cluster. Applications that are distributed across the processors of the cluster use either message passing or network shared memory for communication. Programs are often parallelised using MPI libraries for inter-processor communication.

It has also been proposed to use conventionally networked computing resources to carry out cluster-style computational tasks. According to a version of this model, jobs are distributed across a number of computers in order to exploit idle time, for example while a network of PCs is unused out of business hours. Discussions related to clusters may be applied equally to loosely coupled heterogeneous networks of computers. Other types of clustered computer resources may include what are known as "blade" systems. This latter cluster topology is not necessarily distributed physically, but may nevertheless be operated as a homogeneous or heterogeneous processor cluster.

A critical aspect of a cluster system is task scheduling. A number of task scheduling systems exist in the prior art with many of these existing within operating systems designed for single processor computer systems or multiple processor systems with operating systems designed for shared memory.

Task schedulers manage the execution of independent jobs or batches of jobs, in support of an application program. An application program performs a specific function for a user. Application programs particularly suited to parallel cluster systems are those with a high degree of mathematical complexity, interdependency and raw microprocessor demand. Examples include finite-element analysis, nuclear and sub-nuclear scattering calculations and data analysis and multi-dimensional modeling calculations involving sequential or heuristic approaches that typically consume large numbers of microprocessor cycles.

On of the primary functions of the task scheduler is to optimize the allocation of available microprocessor resources across a plurality of prioritized jobs. Thus, optimizing task scheduling can lead to significant improvements in the apparent processing power or speed of the cluster.

Known task-scheduling techniques tend to treat parallel application programs as distinctive monolithic blocks or groups of monolithic blocks whose width corresponds to the number of processors used by the program and whose height represents the estimated computational time for the program. These jobs are organized in a logical structure called a precedent tree or data flow graph that is a constraint which is used to allocate how the parallel program tasks are distributed across the cluster. This scheduling policy approach conceals the parallel programs (or jobs) elementary processes (or tasks) and the effect of this is that the parallel program does not constantly utilize the entire number of processors, or nodes, that are, or could be, assigned to it. Idle processors that are not available for use by other jobs in a different parallel application program can thus degrade the apparent throughput of the parallel processing system.

Optimization of the task-scheduler can therefore lead to significant enhancements in the processing power and speed of a parallel processing cluster and it is an object of the present invention to provide an improved task-scheduling technique that overcomes or at least ameliorates the abovementioned problems.

### Disclosure of the Invention

In one aspect, the invention provides for a method of optimizing a task-scheduling system comprising decomposing one or more parallel programs into its component tasks and dynamically moving the parallel programs tasks into any available idle nodes in such a way that the execution time of the parallel program is decreased.

In an alternative aspect the invention provides for a method of optimizing a task-scheduling system comprising representing one or more parallel programs, or jobs, as unitary two-dimensional blocks equating to the amount of time that the job will take to execute for a specified number of processors, or nodes, wherein the jobs are queued in an array whose width corresponds to the total number of available nodes in any single time interval, wherein each job is positioned in the array according to a block-packing algorithm.

The block-packing algorithm is preferably such that the packing of the jobs at the block level is substantially optimized for any arrangement of jobs in the array.

Preferably, the method further includes the step of decomposing one or more jobs into their component time-unitary tasks and dynamically redistributing the tasks into any available idle nodes in such way as to exploit any idle nodes within the structure of any of the jobs in the array thereby decreasing the execution time of at least one of the jobs.

Preferably, the width of the block represents the needed computational power and the height of the block corresponds to the expected or required duration of the job.

To represent a homogeneous cluster of nodes, the array may be represented by a bin having a horizontal, equally dimensioned array of nodes, and a vertically, equally spaced, time increment.

To represent a heterogeneous cluster of nodes, the array may be represented by a bin having a horizontal, unequally dimensioned, array of nodes, and/or a vertically, unequally spaced, time increment.

In an alternative aspect, the invention provides for a method of creating and/or modifying a data flow graph in a parallel multicomputer system, comprising the steps of:

- characterizing one or more jobs in terms of expected execution duration and computational power needs;

- placing the jobs in a queue, the queue viewed as a two-dimensional array of nodes and time, according to a bin-packing algorithm;

- locating idle times, or holes, within the jobs;

- scanning each of the jobs in order to build a data flow graph which includes reference to the holes;

- scanning the queue from earliest to the last, and attempt to move each task down in the queue by analyzing the position of each task in comparison to the position of the lowest holes in the data structure and if the hole is lower than the task, moving the task in the queue to fill the hole and thus updating the data flow graph; and

- repeating the scanning process until the maximum number of available holes have been filled and a modified data flow graph has been created.

In an alternative embodiment, the tasks may have variable duration from time-unitary, thus representing tasks that require varying computational power and when queued, are represented as vertically distorted tasks.

In yet an alternative embodiment, the horizontal axis of the queue bin representing the nodes may be unequally dimensioned, thus representing a heterogeneous cluster of nodes where some nodes have different computational power.

Where the nodes are unequally spaced, the resulting data flow graph includes tasks that have an apparent difference in duration.

In the heterogeneous node case, the allocation of tasks to holes is adapted to take into account the apparent time-distortion of the tasks.

In yet a further embodiment, the modification of the data flow graph is adapted to take into account the time required by the processor to change its working context.

When the change in working context is taken into account, the tasks may be distorted in the time axis to allow for overduration representing the time needed for the processor to change working context.

The invention also provides for a network of computing resources adapted to operate in accordance with the method as hereinbefore defined.

The invention also provides for a computing device adapted to schedule tasks on a cluster in accordance with the method as hereinbefore defined.

**Brief Description of the Drawings**

The present invention will now be described by way of example only and with reference to the drawings in which:

Figure 1:    Illustrates an example of an embodiment of a topology of a cluster;

Figure 2:    Illustrates the analogy between ice-cubes in a glass and job placement in a queued bin;

Figure 3:    Illustrates a sequence of Gantt charts for a bin queue and their corresponding hole representation showing the task structure within an array of jobs for a two phase scheduling system according to an embodiment of the invention;

Figure 4:    Illustrates a simple example of a Gantt chart of a bin queue showing how a hole representation for consecutive monolithic jobs is represented in phase one, which in this case has no holes;

Figure 5:    Illustrates an hypothetical job and its internal task structure;

Figure 6:    Illustrates a sequence of Gantt charts for a bin queue showing reallocation of holes in the job structures over two phases for a sequence of idealized jobs;

Figure 7:    Illustrates a rearrangement model for calculating the advantage gained by the scheduling method;

Figure 8:    Illustrates an example of a more complex task scheduling procedure;

Figure 9:    Illustrates how the tasks size is varied for tasks having variable complexity requirements;

Figure 10:    Illustrates how non-unitary tasks in a job are distorted when queued in a homogeneous cluster data structure;

Figure 11:    Illustrates how the width of the nodes in the data graph may be varied to represent cluster heterogeneity;

Figure 12:    Illustrates the assignment of a unitary-task job to a heterogeneous cluster and how the tasks is distorted;

Figure 13:    Illustrates a method by which program context modification may be taken into account;

Figure 14:    Illustrates how non-negligible processor communication time may be represented in a job;

Figure 15:    Illustrates a prioritization scheme applicable to the invention;

Figure 16:    Illustrates how the prioritization scheme can reallocate jobs in a bin queue; and

Figure 17:    Illustrates how a task can enter the bin queue without causing any disruption.

## Best Mode for Carrying Out the Invention

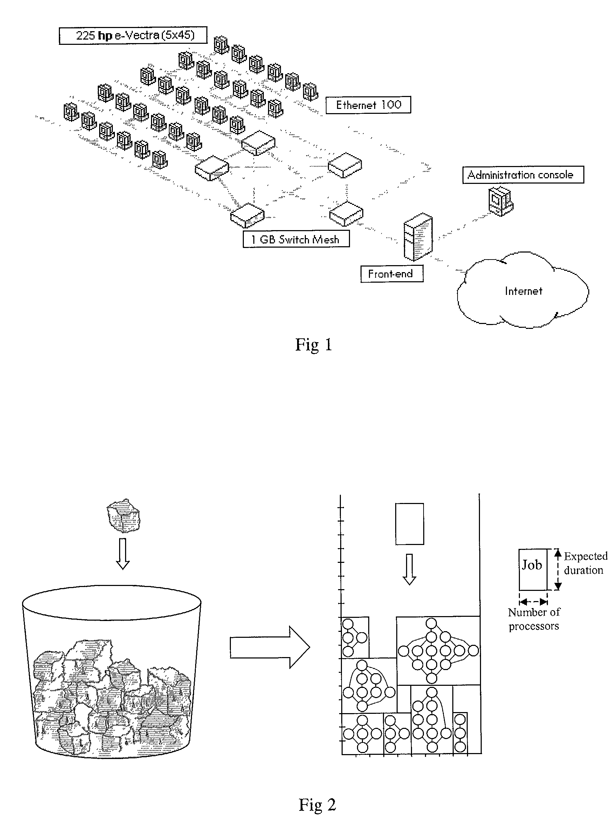

The present invention will be described in the context of a cluster similar to that shown in figure 1. This cluster represents a test-bed which has undergone trials by the applicant and consists of 225 Hewlett Packard e-Vectras each including a PIII microprocessor running at 733MHz, 256Mb of RAM and a 15Gb hard disk. The machines are linked together by a fast Ethernet network. The cluster runs Linux Mandrake 7.1 and managed by Open PBS. In this configuration, the cluster exhibits a capacity of 81.6Gflops. A convenient first level of abstraction is to consider the group of computers as simply a processor cluster. Thus, in the following discussion, reference will be made to either a cluster or a processor cluster. More realistic treatments will include the effects of RAM, disk resources, administration hardware and other support devices in the cluster.
A useful model for visualizing the principle and operation of an embodiment of the invention is illustrated in figure 2. According to this model, the time-dependant power characteristics of a cluster can be represented by a glass into which cubes of ice, or jobs, are dropped. The glass is analogous to a bin queue which can be described as follows, and is named with reference to the use of the expression 'bins' in signal processing technologies.
The simplest example of a bin queue can be represented by the two-dimensional Gantt chart shown in the right of figure 2. This has a horizontal axis corresponding to an evenly spaced array (bins) of microprocessors, nodes or other unit of computing capacity. The vertical axis represents an evenly spaced time scale wherein each unitary step corresponds to a unit of time. For a homogeneous computer cluster, this can correspond to a unit of calculation time or processor cycle time. This representation can be referred to as a bin queue as it represents a plurality of microprocessor 'bins' into which are queued or allocated parallel processing applications or jobs. It is also appropriate to refer to these constructs as Gantt charts as they represent the time progress of a sequence of interrelated tasks.

Again referring to figure 2, into the bin queue are 'dropped' parallel programs or 'jobs'. By analogy with ice-cubes, the jobs are initially considered to be solid entities having no internal structure or adaptability to the glass. Each job has a width corresponding to the anticipated number of processors that are needed and the height corresponds to the expected or required execution time for the job. In this first phase, the jobs, like the ice-cubes in the glass, arrange themselves in a configuration that attempts to make best use of the available space. There are a number of algorithms for achieving such a packing arrangement and these attempt to efficiently pack a series of regularly shaped blocks in a time-sequenced fashion, into a bin. Other packing paradigms may be known in the art and are not to be excluded from the scope of the invention.

The internal structure of the jobs can be represented by drops of water associated with the cubes. These are identified with the elementary units, or 'tasks' of the job. As can be seen from figure 2, tasks constitute the structure of a notional block that in turn represents the coarse structure of the job as a whole. The complexity of a job can be quantified by its internal computational complexity as well as the time which is required to do the job. This can be quantified by a recursive analysis of the tasks. That is, the function inside the task, the function inside the function etc.

Armed with this mental construct, the operation of an embodiment of the invention can be described as follows.

Initially, we shall consider a homogeneous processor cluster. This equates to a cluster of processors which have the same or substantially similar calculational capacity. It is also assumed that the size of the cluster is invariant and that there is no latency in the communication links underlying the network.

There are other inherent constraints that can affect the operation of the task scheduling system. These include the time required by a processor to switch from one working context to another, the duration of the data packing/ unpacking process when circulating on the network and the time that data need to circulate on the network. Constraints that affect the job itself include the duration of the tasks in the job, the extent of the data flow graph knowledge. In the case of online scheduling, the data flow is determined continuously but is completely determined in the case of offline scheduling.

Further parameters that might affect the operation of the task scheduling system include the addition of prioritization information for a job and the degree of a task in a data flow graph. Here, a tasks degree reflects its interconnectedness. That is, the higher degree, the more branches a node has connected thereto.

Given these constraints, the first exemplary embodiment which is described below will focus on a novel task scheduling system for a static, homogeneous cluster of processors where inter-processor communication and data unpacking time is negligible. The latter issues referred to above will be discussed by reference to a modified form of the exemplary embodiment.

Referring again to figure 2, it can be seen that the jobs have an internal structure comprising unitary tasks, represented by the circles in the Gantt chart, and vacant power/time space. The internal structure of the jobs will depend on the specific parallel application represented by the job. However, it can be seen that there is idle capacity within the internal task structure of the jobs.

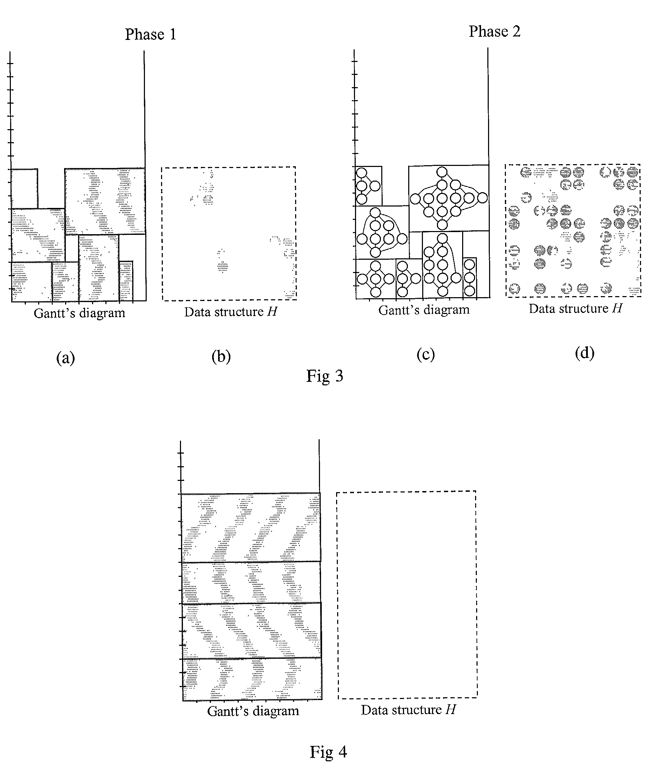

Referring to figure 3(a), a Gantt chart of a bin queue is shown. It is assumed that the jobs, represented by the blocks, have been submitted and characteristics of these jobs (arrival time, expected duration, computational power needs) are known and stored in a database. In phase 1 of the scheduling process, the jobs are placed in the Gantt chart as shown according to a packing algorithm. As the jobs are 'dropped' (grey blocks in figure 3(a)) into the qu eue, they define holes, or units of idle time (see figure 3(b)). These units of idle time are logically represented as holes having the same time and power dimensions at the detailed task structure elements of the jobs themselves. Creating a logical representation $H$ of the gross hole structure in the data structure completes the first phase in the process.

The second phase begins by refining the schedule. Each of the jobs on the job list is scanned in order from the first to arrive to the last, and a set of tasks is created. This is analogous to decomposing the jobs into their unitary task structure at a detailed level while including time dependency information for the tasks. This functionality may be handled by an external application that builds a data flow graph. A new data structure is created which stores the assignment of each of the tasks, i.e.; the node identification, job relationship, time sequence of the tasks. This result of this phase is that new holes are added into the data structure as shown in Figures 3(c) and (d).

In the present case the cluster is homogeneous and static. Therefore, the width of each of the bins in the bin queue is constant. Also, as each of the task time demands is assumed to be the same, the vertical axis is constant.

Figure 3(d) illustrates the completed data structure $H$ that represents all of the idle holes. Each task in the Gantt chart is then rescanned from bottom to the top, i.e.; from the first to the last job, and it is determined whether it is possible to move the tasks down in the schedule. This is done by analyzing the position of the task in comparison to the position of the lowest holes in the data structure. If the hole is lower than the task, the task is dropped into the hole and the data structure is updated. The second phase is completed when all of the tasks have been scanned and, where possible, moved or promoted.

It is useful to analyze the performance of this technique in order to gauge the effectiveness in improving the performance of the scheduling system. As a first approximation, to measure the advantage provided by the second phase of the process, the advantage derived from the optimal case is calculated. This optimal situation can be represented by a data structure in which all of the scheduled jobs use all of the available processors all of the time. That is, the width of each job is equal to the width of the Gantt chart. This situation is illustrated in figure 4. At the end of the first phase, the data structure is full with no holes resulting from any non-ideal packing.

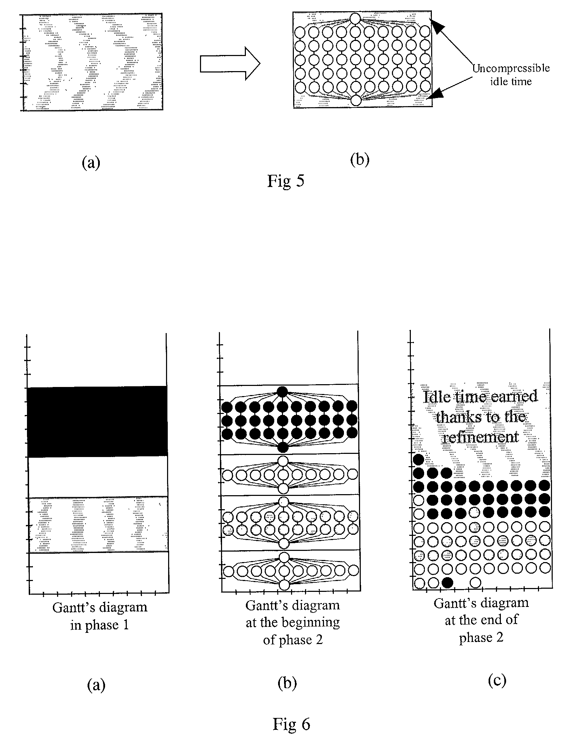

If the granularity is changed to task-level (see figure 5(a) and (b)), it is possible to look at the internal data structure of the jobs Intuitively, one would think that the data structure would not be empty as the hypothetical nature of distributed computing applications implies that there should exist a master process that is responsible for initiating the other downstream processes as well as a process which detects the termination of the parallel program. This situation is represented in figure 5 where the job in 5(a), which ostensibly resembles full utilization of processors over time, is decomposed into its constituent tasks. When considered at the higher degree of granularity, figure 5(b) shows a task tree for an idealized distributed processor program. The first time period, that is the first row is consumed by the task that initiates the rest of the parallel program. The job finishes with a task that detects the end of the job. These holes cannot be populated by tasks from within the job, as the lower holes cannot 'know' about anything happening after the job starts and the upper holes are created after the job is finished. Thus there is what is known as incompressible idle time at the beginning and end of the job.

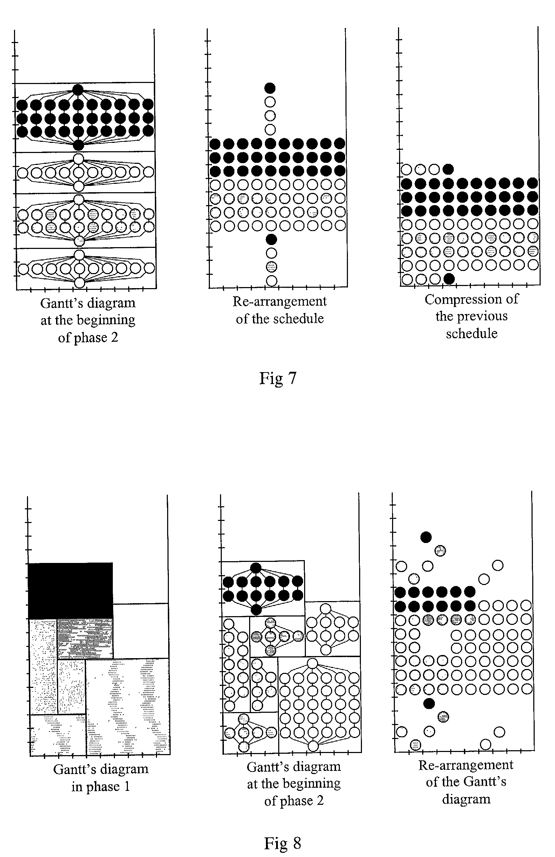

Given this assumed constraint, the correlation between the job number N, the width of the bin queue L and the advantage between phase 1 and 2 on a quantity denoted $g_m$ and the amount of idle time $g_i$ can be determined. This is achieved by looking at a sequence of, for example, 4 idealized jobs as shown in figure 6. Here, if we consider that the incompressible idle time cannot be populated by tasks in the same job, but can be used by tasks in a following job (so long as they follow the correct time sequence) the advantage shown in figure 6(c) can be obtained. Here, the jobs are decomposed as shown in figure 6(b) in the first phase, and the tasks then scanned from bottom to top and, for convenience, left to right. Thus, the first task in the second job can populate a hole in the first job, for example the bottom right. This allows tasks in the second row of the second job to populate upper incompressible idle time in the first job. Thus, after allowing the tasks to drop into the array of 'allowed' idle time locations, we are left with the data structure shown in figure 6(c). This approach is of limited use when trying to find a general relation that specifies the advantage, so it is useful to consider task promotion that leaves a symmetrical data structure. This scenario is shown in figure 7 whereby after phase 1, the tasks are rearranged in a symmetrical manner as in figure 7(a) and then compressed as shown in figure 7(c).

Considering the first phase in figure 7, the advantage corresponds to the difference in the height between tasks placed vertically and horizontally. This difference is equal to

$$N - \left\lceil \frac{N}{L} \right\rceil.$$

As the first and third jobs are symmetric, we obtain:

$$g_m = 2 \times \left( N - \left\lceil \frac{N}{L} \right\rceil \right)$$

In the context of the example shown in figure 7, the formula provides the following analysis. Initially, the makespan is equal to 15 time units. After refinement, it becomes 9, so the advantage is

$$15 - 9 = 6 = 2 \times \left( 4 - \left\lceil \frac{4}{10} \right\rceil \right).$$

The advantage obtained in terms of the idle time $g_i$ can be shown to be:

$$g_i = \left[\left(N - \left\lceil\frac{N}{L}\right\rceil\right)\right] \times L + \left[\left(N - \left\lceil\frac{N}{L}\right\rceil\right) \times L + N\%L\right] = g_m \times L + N\%L$$

Here, *N%*L corresponds to *N* modulo *L.* If a job of smaller width is considered as is shown in figure 8 and if it is considered that all jobs will require a minimum of two processors, grouping 'beginner' tasks together at the bottom of the Gantt chart and the ending tasks together, the result in figure 8 is obtained. Contrary to the previous situation, the height is not conserved when an equivalent Gantt chart is built by grouping beginner and ending tasks together. Also, some tasks appear in the middle of the bin queue as the job blocks only incompletely fill the available width.

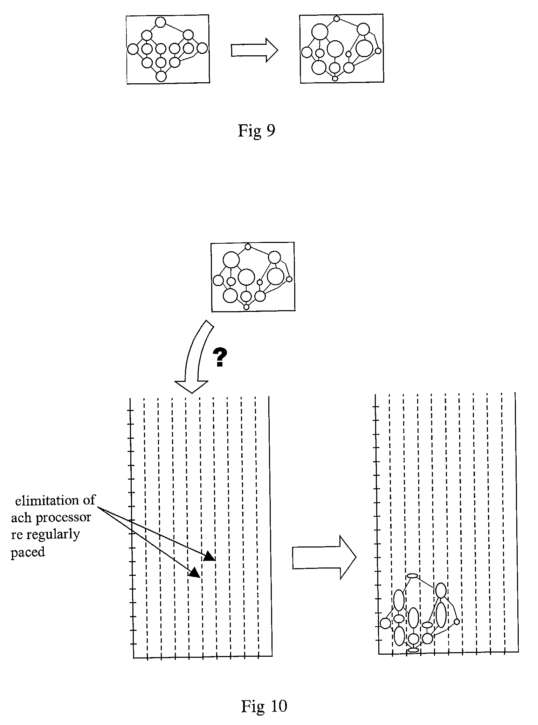

A more complex embodiment can be considered if the situation is considered where the tasks can have non-unitary duration. That is, the expected duration of the tasks or the time required for the tasks to run on a particular processor varies between tasks in the job. This situation is illustrated by the two job structures shown in figure 9. A unitary task job is shown in the left in figure 9. To represent the increase in anticipated task complexity, the radius of the tasks is increased as in the job block in the right of figure 9. As the cluster is assumed to be homogeneous in this case, the task nodes must be distorted to make them 'fit' into the logical delimitation of the processor to which it is assigned. It is assumed that conservation of surface of the task applies, that is, the number of instructions in the task is constant. Thus where the width is divided by *n*, the height has to be multiplied by the same factor. So, the effect of some tasks requiring more processing power than others results in delaying the execution of following tasks. This situation is represented graphically in figure 10 where a job including non-unitary tasks is internally distorted and queued the cluster represented by the Gannt chart.

To implement this possibility, the expected duration of each task must be determined, the data structure must be capable of storing the expected duration for each task and the reallocation of the tasks must check that the reorganized data structure can accommodate the distorted internal structure of the job.

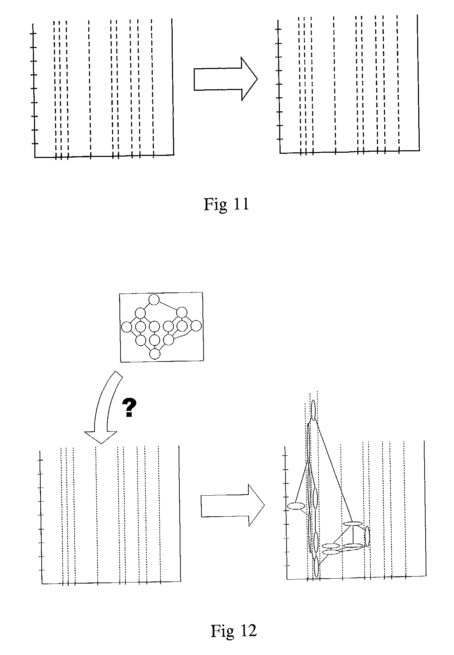

Yet another embodiment of the invention extends this functionality to the case where the homogeneity of the cluster is relaxed. That is, the cluster may include computers having processors or other hardware that has the effect of varying of speeds and capacities. Here, it is assumed that the nodes have different speeds reflecting different processor speeds, cache memory or similar. Such a situation is shown in figure 11. To represent this situation, the horizontal axis of the bin queue is distorted to take into account the relative different processing power of the nodes. As the tasks have the same duration, but are performed on processors of different speeds, the 'apparent' task duration changes. Referring to figure 12(a), a job having the internal unitary task structure is queued in the Gantt chart by distorting the tasks horizontally. This results in additional apparent holes that affect the granularity of the job and thus it's amenability to population by tasks in later jobs.

In terms of implementing this algorithm, there are two possibilities. The first is that the jobs are always considered as rectangles where the height corresponds to the maximum duration required to perform the parallel program. That is, some tasks assigned to a powerful machine will finish before other tasks even if they are on the same level in the data flow graph. In the second case, it may be considered that the border of the parallel program is not a rectangle but distorted where the upper edge is not a line or segment, but a set of segments.

The first situation is relatively straightforward as the first phase of the algorithm is preserved. The second phase is changed taking into account the differences between the computational nodes when a task is to be promoted. This is done by searching for the lowest holes in the data structure. If there is a hole below the task being considered, the duration of the task is multiplied by the coefficient of the processor corresponding to the holes to obtain a duration *d'*. This is compared with the duration of the hole to determine if there is sufficient space to place the task in it. If there is enough space, the task is moved and the data structure updated. If there is insufficient space, another hole is tested for suitability. If the task cannot be moved, the process moves to the next task and the procedure repeated.

The second case is more complex as the first phase algorithm needs to be changed to take into account the shape that represents the jobs. In this case, the job shape will be irregular and thus the packing algorithm will be more complicated thus increasing the complexity of the jobs.

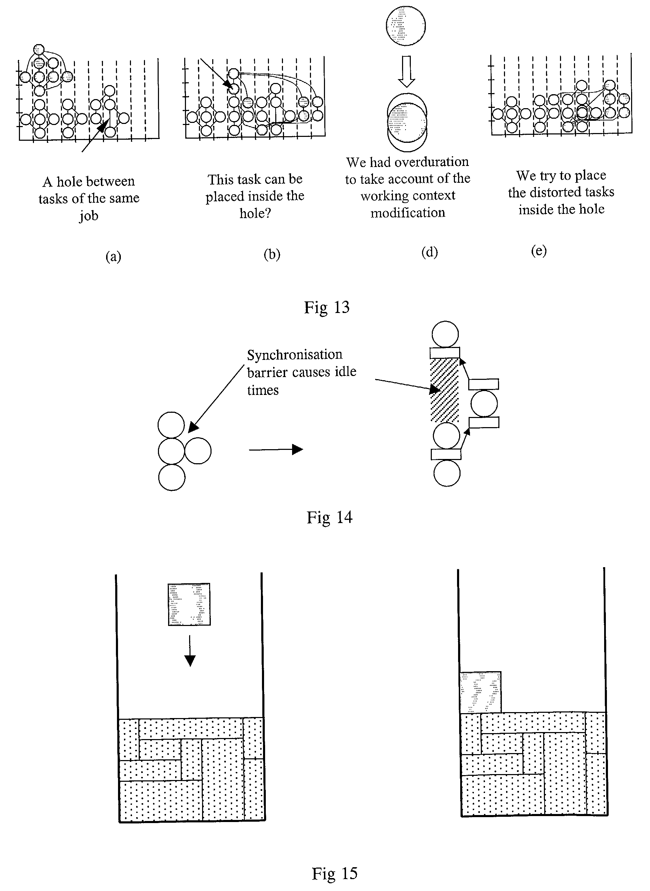

In yet a further variation of the invention, the time required by the processor to change its working context is taken into account. This situation is shown in figures 13 and 14. This period equates to the time between saving a tasks data and program of a first job and loading the data and program for the next task or program of another job. Considering a job containing a plurality of tasks, context change time compensation will not be required if there is no alteration in the working context. If there is a change of processor working context, time will be added before the task to allow for the saving and loading of data and the program by the processor. Introducing this "overduration" approximates more closely a real situation as it is possible that context changing may affect the operation of a processor cluster, particularly where the cluster is heterogeneous.

In terms of the procedure, the first and second phase steps need only be modified slightly. If the cluster is homogeneous, the first phase is unchanged as there is only a change of working context at the beginning of each job.

Therefore, it is only necessary to include an overduration at the beginning of (i.e.; under) the rectangle representing the job. If the cluster is heterogeneous, the overduration will change depending on the power of the node. This can be taken into account by the first phase protocol.

For the second phase, it is necessary to add an overduration to the task before checking if it can be moved. This is done by searching for the lowest holes in the data structure. If a hole is below the task, the duration of the task is multiplied by the coefficient of the processor corresponding to the hole to obtain a duration $d'$. To this is added the overduration thereby obtaining $d''$. This value is compared with the duration of the hole to determine if there is sufficient space in it to place the task. If there is enough space, the task in promoted and the data structure updated. If not, a new hole is found and the procedure is repeated. If the task cannot be moved, the procedure moves to the next task.

This procedure is illustrated in figure 13(a) which shows a hole between tasks of the same job. The task in figure 13(b) is to be moved to this hole and it is therefore necessary to add an overduration (figure 13(c)) to take into account the change in the working context of the processor. It is then determined whether or not the distorted task can be placed in the hole, and the data structure updated in response to any move.

Another embodiment is where inter-processor communication time is non-zero. This situation is shown in figure 14 whereby the synchronization barrier causes idle time to be introduced between tasks. The invention can be modified to take into account this extra idle time with the reallocation or promotion of tasks depending on the modified internal job structure.

It is considered that there are other refinements and modifications to the task scheduling system that take into account cluster behavior which is more realistic and complex. These are considered to be within the scope of the present invention and it is envisaged that such modifications may be included without substantially departing from the principles of the invention.

Another possible alternative embodiment of the invention it is useful to consider a multi -user cluster environment incorporating the notion of priority of a parallel application. In the context of the invention, it has been found useful to include the concept of what is known as a "disturbance credit". A disturbance credit reflects the degree of disturbance that a user causes by introducing a higher priority job into the cluster processing stream. A transfer of disturbance credits results from a user-provoked disturbance in the bin queue whereby a 'wronged' user gains these credits when their job is adversely affected.

Figure 15 illustrates an example where a new job having a duration of two units is dropped into a bin queue. The simplest case is shown where the arrival of this job does not introduce a disturbance in the previously computed schedule and the starting time of this job equals the earliest time where two processors are available.

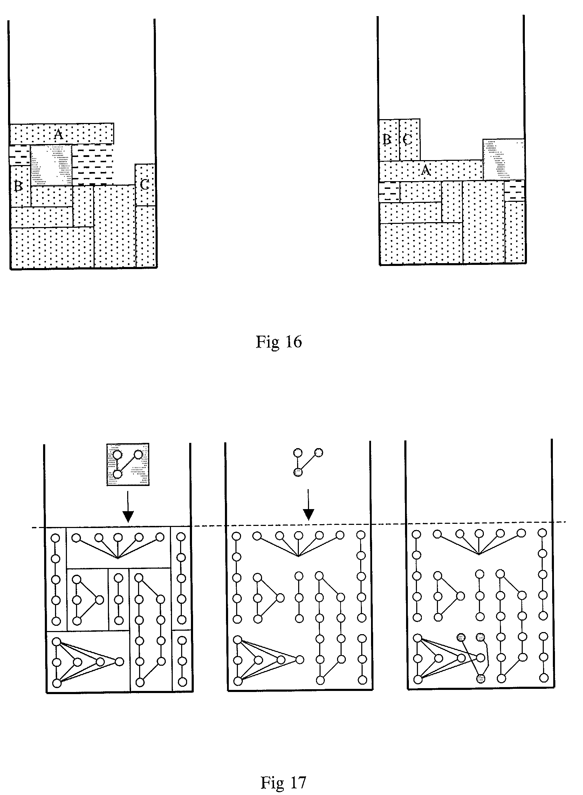

Figure 16 shows a more complicated situation where the job has an inherently higher priority and is to be promoted or advanced by one time unit. To allow this, there are two possibilities shown in figure 16. In the Gantt chart at the left, job A might be retarded and in the right, jobs B and C might be retarded. If the resulting schedules are analyzed, it can be seen that the second schedule has introduced less disturbance because the total idle times are lower.

However, in the second case, the number of jobs moved is greater. In both cases, the jobs which are moved are owned by users who have been disadvantaged. They are compensated by receiving a disturbance credit that reflects the degree of disturbance. This can be quantified according to the width of the job and the vertical displacement which it undergoes. For example, job A which is 5 units wide, when delayed 2 time units, would accumulate a disturbance credit of 10 units.

Practically, when a user account is opened, the user receives an amount of disturbance credit which he or she must manage when a job is submitted. A user needs to optimize his or her disturbance credits according to earned times. Thus at an overall level this introduces a further level of optimization to the invention which may be useful in certain contexts. This technique can be extended once it is realized that a job is not necessarily confined to a single rectangular block. If there are multiple blocks for a job, further possibilities for scheduling are feasible.

It is also noted that jobs can have a higher degree of granularity. In this case, some jobs can be absorbed by an existing schedule due to the presence of holes having a size equivalent to that of the tasks. Jobs can also be represented by shapes other than rectangles as the set of tasks in the job does not necessarily take up all of the perimeter of the shape. Given this situation, the introduction of the new jobs or set of tasks does not necessarily cause an automatic disturbance. In fact, when such a job is introduced into the scheme, the user can earn new disturbance credits.

Thus it can be seen that the invention provides a new approach to task scheduling in clusters. The technique is extensible and can be refined to take into account real-world behavior and attributes of processor clusters such as finite inter-processor communication time and context changing time as well as being amenable to use in heterogeneous clusters. It is envisaged that there are further extensions and modifications that will be developed, however it is considered that these will retain the inventive technique as described herein.

In terms of suitable applications it is envisaged that the task scheduling technique would be particularly useful in multi-user processor clusters running applications such as finite element analysis computationally intensive numerical calculations, modeling and statistical analysis of experimental data.

Although the invention has been described by way of example and with reference to particular embodiments it is to be understood that modification and/or improvements may be made without departing from the scope of the appended claims.

Where in the foregoing description reference has been made to integers or elements having known equivalents, then such equivalents are herein incorporated as if individually set forth.

**Claims**

1. A method of optimizing a task-scheduling system comprising decomposing one or more parallel programs into its component tasks and dynamically redistributing the parallel programs tasks into any available idle nodes in such a way that the execution time of the parallel program is decreased.

2. A method of optimizing a task-scheduling system comprising representing one or more parallel programs, or jobs, as unitary two-dimensional blocks equating to the amount of time that the job will take to execute for a specified number of processors, or nodes, wherein the jobs are queued in an array whose width corresponds to the total number of available nodes in any single time interval, wherein each job is positioned in the array according to a block packing algorithm.

3. A method of optimizing a task-scheduling system as claimed in claim 2 wherein the block packing algorithm is adapted such that the packing of the jobs at the block level of aggregation is substantiallyoptimized for any arrangement of jobs in the array.

4. A method of optimizing a task-scheduling system as claimed in any one of claims 2 or 3 further including the step of decomposing one or more jobs into their component time-unitary tasks and dynamically redistributing the tasks into any available idle nodes in such a way as to exploit any idle nodes within the structure of any of the jobs in the array thereby decreasing the execution time of at least one of the jobs.

5. A method of optimizing a task-scheduling system as claimed in any one of claims 2 to 4 wherein the width of the block represents the needed computational power and the height of the block corresponds to the expected or required duration of the job.

6. A method of optimizing a task-scheduling system as claimed in any one of claims 2 to 5 wherein in order to represent a homogeneous cluster of nodes, the array is represented by a bin having a horizontal, equally dimensioned array of nodes, and a vertically, equally spaced, time increment.

7. A method of optimizing a task-scheduling system as claimed in any one of claims 2 to 6 wherein in order to represent a heterogeneous cluster of nodes, the array is represented by a bin having a horizontal, unequally dimensioned, array of nodes, and/or a vertically, unequally spaced, time increment.

8. A method of creating and/or modifying a data flow graph in a parallel multicomputer system, comprising the steps of:

   - characterizing one or more jobs in terms of expected execution duration and computational power needs;

   - placing the jobs in a queue, the queue viewed as a two-dimensional array of nodes versus time, according to a bin-packing algorithm;

   - locating idle computation periods, or holes, between the jobs;

   - scanning each of the jobs in order to build a data flow graph which includes reference to the holes;

   - scanning the queue from earliest to the last, and attempting to move each task down in the queue by analyzing the position of each task in comparison to the position of the lowest holes in the data structure and if the hole is lower than the task, moving the task in the queue to fill the hole and thus updating the data flow graph; and

   - repeating the scanning process until the maximum number of available holes have been filled and a modified data flow graph has been created.

**9.** A method of optimizing a task-scheduling system as claimed in any one of claims 1 to 8 wherein the tasks may have variable duration from time-unitary, thus representing tasks that require varying computational power and when queued, are represented as distorted in the time axis.

**10.** A method of optimizing a task-scheduling system as claimed in any one of claims 1 to 9 wherein the horizontal axis of the queue bin representing the nodes is unequally dimensioned, thus representing a heterogeneous cluster of nodes where some nodes have different computational power.

**11.** A method of optimizing a task-scheduling system as claimed in any one of claims 1 to 10 wherein the nodes are unequally spaced, the resulting data flow graph includes tasks which have an apparent difference in duration.

**12.** A method of optimizing a task-scheduling system as claimed in claim 11 wherein the allocation of tasks to holes is adapted to take into account the apparent time-distortion of the tasks.

**13.** A method of optimizing a task-scheduling system as claimed in any preceding claims wherein the data flow graph is adapted to take into account the time required by the processor to change its working context.

**14.** A method of optimizing a task-scheduling system as claimed in claim 13 wherein the tasks are distorted in the time axis to allow for over-duration representing the time needed for the processor to change working context.

**15.** A network of computing resources configured to operate in accordance with any of claims 1 to 14.

**16.** A computing device adapted to operate a task scheduling system in accordance with the method as claimed in any of claims 1 to 14.

Fig 1

Fig 2

Phase 1

Phase 2

Gantt's diagram

Data structure $H$

Gantt's diagram

Data structure $H$

(a)

(b)

(c)

(d)

Fig 3

Gantt's diagram

Data structure $H$

Fig 4

(a)                                        (b)

Fig 5

Gantt's diagram
in phase 1

Gantt's diagram
at the beginning
of phase 2

Gantt's diagram
at the end of
phase 2

(a)                          (b)                          (c)

Fig 6

Gantt's diagram
at the beginning
of phase 2

Re-arrangement
of the schedule

Compression of
the previous
schedule

Fig 7

Gantt's diagram
in phase 1

Gantt's diagram
at the beginning
of phase 2

Re-arrangement
of the Gantt's
diagram

Fig 8

Fig 9

elimitation of
ach processor
re regularly
paced

Fig 10

Fig 11

Fig 12

A hole between tasks of the same job

This task can be placed inside the hole?

We had overduration to take account of the working context modification

We try to place the distorted tasks inside the hole

(a)           (b)           (d)           (e)

Fig 13

Synchronisation barrier causes idle times

Fig 14

Fig 15

Fig 16

Fig 17

## EUROPEAN SEARCH REPORT

**European Patent Office**

**Application Number**

EP 01 41 0158

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | BELKHALE K P ET AL: "TASK SCHEDULING FOR EXPLOITING PARALLELISM AND HIERARCHY IN VLSI CAD ALGORITHMS" IEEE TRANSACTIONS ON COMPUTER AIDED DESIGN OF INTEGRATED CIRCUITS AND SYSTEMS, IEEE INC. NEW YORK, US, vol. 12, no. 5, 1 May 1993 (1993-05-01), pages 557-567, XP000386017 ISSN: 0278-0070 * paragraph 'OOIV! * | 1-16 | G06F9/46 |
| A | EL-REWINI H ET AL: "TASK SCHEDULING IN MULTIPROCESSING SYSTEMS" COMPUTER, IEEE COMPUTER SOCIETY, LONG BEACH., CA, US, US, vol. 28, no. 12, 1 December 1995 (1995-12-01), pages 27-37, XP000550425 ISSN: 0018-9162 * the whole document * | 1-16 | |
| X | AHMAD I ET AL: "ON PARALLELIZING THE MULTIPROCESSOR SCHEDULING PROBLEM" IEEE TRANSACTIONS ON PARALLEL AND DISTRIBUTED SYSTEMS, IEEE INC, NEW YORK, US, vol. 10, no. 4, April 1999 (1999-04), pages 414-431, XP000823958 ISSN: 1045-9219 * paragraph '0004! * | 1 | **TECHNICAL FIELDS SEARCHED (Int.Cl.7)**<br><br>G06F |
| X | US 5 392 430 A (CHEN MING-SYAN ET AL) 21 February 1995 (1995-02-21) * column 3, line 29 - column 5, line 50 * | 2,8 | |

The present search report has been drawn up for all claims

| Place of search | Date of completion of the search | Examiner |
|---|---|---|
| THE HAGUE | 20 September 2002 | Bijn, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**                EP 01 41 0158

This annex lists the patent family members relating to the patent documents cited in the above-mentioned European search report.
The members are as contained in the European Patent Office EDP file on
The European Patent Office is in no way liable for these particulars which are merely given for the purpose of information.

20-09-2002

| Patent document cited in search report | Publication date | Patent family member(s) | Publication date |
|---|---|---|---|
| US 5392430 A | 21-02-1995 | JP 2528612 B2<br>JP 6202882 A | 28-08-1996<br>22-07-1994 |

EPO FORM P0459

For more details about this annex : see Official Journal of the European Patent Office, No. 12/82